# EUROPEAN PATENT APPLICATION

(11) **EP 4 819 067 A1**
(43) Date of publication of application: **07.10.2026**
(21) Application number: 25167980.9
(22) Date of filing: 02.04.2025
(51) Int. Cl.: G06V 10/82, G06T 7/00

(54) **COMPUTER-IMPLEMENTED METHOD TO DETERMINE AT LEAST ONE FEATURE OF A PREDETERMINED PIXEL OF AN IMAGE**

(71) Applicant: Siemens Healthineers AG, 91301 Forchheim (DE)
(72) Inventor: HUANG, Heyuan, 08540-6632 Princeton, NJ (US); REAUNGAMORNRAT, Sureerat, 08540-6632 Princeton, NJ (US); KAMEN, Ali, 08540-6632 Princeton, NJ (US)
(74) Representative: Siemens Healthineers Patent Attorneys

(57) **Abstract**

The invention relates to a computer-implemented method to determine at least one feature of a predetermined pixel (22) of an image, wherein the computer-implemented method comprises: receiving a first image information (10) comprising at least one image that comprises the predetermined pixel (22); receiving at least one second image information (13) that corresponds to the first image information (10) but has a different resolution; for the first image information (10) and the at least one second image information (13) individually: determining multiple features (18) by applying a first trained machine learning model (16) to the respective image information (10, 13); selecting pixel features (20) that are assigned to the predetermined pixel (22); and determining interpolated features (25) for the respective image information (10, 13). The computer-implemented method also comprises determining a pixel information (29) by applying a second trained machine learning model (28) to the determined interpolated features (25).

## Description

The invention relates to a computer-implemented method to determine at least one feature of a predetermined pixel of an image. The image is in a preferred example a medical image. Besides, the invention relates to a method to determine at least one feature of a predetermined pixel of an image. Further, the invention relates to a data processing system and a computer program product to perform such a computer-implemented method.

A medical treatment or examination may depend on accurate information obtained from an image to localize a target and/or critical anatomical structures in the image. This is in particular the case for high precision radiation therapy or image guided interventions, for example. The image comprises multiple pixels so that the accurate information may be determined for each pixel individually. However, the determination should be fast to be used in an intra-operative medical task but remain accurate, meaning a balance is to be achieved between accuracy and speed of the determination.

It is the object of the invention to provide to provide fast and with high accuracy at least one information about at least one predetermined pixel of an image.

The independent claims solve the object.

A first aspect of the invention relates to a computer-implemented method to determine at least one feature of a predetermined pixel of an image. The image is in a preferred example a medical image. The medical image may be acquired by magnetic resonance imaging (MRI), computer tomography (CT), positron emission tomography (PET), ultrasound (US) imaging or another medical imaging technique. A data processing system may perform the computer-implemented method. The data processing system may be comprised by a medical imaging device and/or may be an external data processing system that may receive data, in particular a first image information, from the medical imaging device to perform the computer-implemented method.

The computer-implemented method comprises receiving a first image information. The first image information comprises at least one image, in particular at least one medical image. The at least one image comprises the predetermined pixel for which the at least one feature is determined. In an example, the first image information may comprise one image. The one image may be referred to as a first image. In another example, the first image information may comprise an image pair or more than two images, wherein all images comprised by the first image information describe at least partially an identical object. If the first image information comprises more than one image, all these images may have an identical resolution.

The computer-implemented method comprises receiving at least one second image information. The second image information corresponds to the first image information, but has a different resolution than the first image information. This means that the second image information comprises at least one further image. The further image differs from the at least one image comprised by the first image information with regard to its resolution. Apart from the resolution, the images match each other, meaning they describe the same object just in a different resolution. In a preferred example, multiple second image information are received each with a different resolution compared to the first image information. The resolution of the second image information may be smaller than the resolution of the first image information. In this example, the first image information is down-sampled or downsized to the second image information with regard to image resolution. This means that the at least one image comprised by the second image information is coarser than the at least one image comprised by the first image information. If the second image information comprises more than one image, all these images may have the same resolution. Alternatively or additionally, the at least one second image information may have a higher resolution than the first image information. The computer-implemented method may comprise determining the at least one second image information based on the first image information.

The computer-implemented method comprises the following three steps that are performed for the first image information and the at least one second image information individually. A first step of the three steps comprises determining multiple features by applying a first trained machine learning model to the respective image information. A second step of the three steps comprises selecting pixel features that are assigned to the predetermined pixel by applying a pixel feature selection algorithm to the multiple features determined for the respective image information. A third step of the three steps comprises determining interpolated features for the respective image information by applying an interpolation algorithm to the selected pixel features. At the end of the three steps, interpolated features for the first image information and interpolated features for the at least one second image information are provided.

In other words, the first trained machine learning model is used to determine features that may be understood as information that describe details or specifics of the first image information or the at least one second image information, respectively. In case the respective image information comprises more than one image, the features are determined under consideration of the more than one image, in particular without differentiation between the individual images that are comprised by the respective image information. The first trained machine learning model may comprise at least one neural network module, in particular at least one encoder for feature extraction.

The pixel features that are selected are features of the determined multiple features that are chosen because they are assigned to the predetermined pixel for which the at least one feature is determined. The pixel feature selection algorithm may comprise at least one predetermined rule, meaning that it may be a rule based algorithm. Alternatively or additionally, the pixel feature selection algorithm may be a further trained machine learning model that differs from the first trained machine learning model. It may comprise at least one neural network or at least a part of a neural network. In this example, the pixel feature selection algorithm was trained in a training process to identify the features that are assigned to the predetermined pixel.

The interpolation algorithm may comprise at least one predetermined rule and may thus be a rule-based algorithm. The interpolation algorithm is configured to interpolate between the selected features. It is hereby assumed that multiple features are selected that are assigned to the predetermined pixel. However, the multiple selected pixel feature are not all considered in the following, but intermediate values between at least some of the selected features are calculated and considered as the interpolated features.

The computer-implemented method comprises determining a pixel information. The pixel information describes the at least one feature of the predetermined pixel. The pixel information is determined by applying a second trained machine learning model to the determined interpolated features. It is applied to all the determined interpolated features. The second trained machine learning model differs from the first trained machine learning model. The second trained machine learning model may comprise at least one neural network that receives the interpolated features and determine the pixel information based on the received interpolated features.

The described computer-implemented method can be applied fast and determines the at least one feature for the predetermined pixel reliably by using the described combination of different machine learning models and algorithms. In particular, the computer-implemented method may be performed simultaneously for multiple pixels of the first image information, which results in fast determination of pixel information for various pixels of the medical image comprised by the first image information.

An embodiment comprises that applying the first trained machine learning model results in determining for the first image information and the at least one second image information individually a hash table. The hash table comprises the multiple features assigned to the respective image information. The hash table may be understood as a multi resolution hash grid that comprises the multiple features. This means that the first trained machine learning model determines and provides the multiple features in a multi resolution hash table. The pixel feature selection algorithm may therefore be a hash function that is configured to select individual entries and hence features comprised by the hash table. The hash table in the sense of the invention may be a data structure that implements an associative array. Entries of this array may be the individual features of the determined multiple features. Typically, hash tables are efficient compared to other data structures such as, for example, table look up structures. Therefore, it is particularly advantageous to use a hash structure to organize the determined multiple features so that the features are easy to access by the pixel feature selection algorithm.

According to a further embodiment, the first trained machine learning model comprises multiple resolution specific encoder networks. Only the encoder network that is specific for the resolution of the respective image information is applied to this image information. This means that there may be a first encoder network that is specific for the resolution of the first image information and at least one second encoder network that is specific for the resolution of the at least one second image information. The encoder network was trained in advance specifically for the resolution of the image information to which it is applied. This explains how the multiple features are determined individually and precisely for the first image information and the at least one second image information when applying the first trained machine learning model.

Another embodiment comprises that applying the pixel features selection algorithm comprises determining a bounding box, in which the predetermined pixel is located in the respective image information. If the respective image information comprises multiple individual images, the bounding box may be determined for the predetermined pixel in a first image of the multiple images of the respective image information. In particular, it may be determined only for the predetermined pixel in a first image of the multiple images of the respective image information.

Applying the pixel features selection algorithm comprises selecting features that are assigned to at least one corner point of the determined bounding box. The features assigned to the at least one corner point are the selected pixel features. In other words, the bounding box is arranged or located around a pixel of interest, which is here the predetermined pixel, and the features that were determined for pixel positions of the at least one corner point of the bounding box by the first trained machine learning model are considered as the pixel features. In a preferred example, the features assigned to all corner point of the bounding box are selected as the pixel features. These corner points are, for example, described by coordinates that may be used to find the features assigned to the at least one corner point among all the determined multiple features. If features are assigned to multiple coordinates and these coordinates describe more than one corner point, the features may be assigned to multiple corner points. In this case, the pixel feature selection algorithm may select features that cannot be traced back to exactly one corner point but to the multiple corner points. The described selection of the pixel features is particularly fast and requires little computation time because only the corner points of the bounding box are considered.

According to another embodiment, the determined bounding box is resolution specific. This means that for the first image information and the at least one second image information different bounding boxes may be determined that may differ from one another. The smaller the resolution, the bigger the bounding box or the smaller the bounding the box may be. The bounding box thus considers a size of the pixels of the image information for which the pixel features are selected to provide a particularly customized pixel feature selection.

In an alternative example, the bounding box is the same for all considered image information. Determining the bounding box may comprise that a size of the bounding box is predetermined, in particular depending on the resolution, so that only a position of the bounding box and thus coordinates of the corner points depend on the respective image information and are thus determined when applying the pixel feature selection algorithm.

A further embodiment comprises that the interpolation algorithm interpolates between the selected pixel features that are assigned to the at least one corner point of the bounding box. For example, if under consideration of the resolution and the position of the predetermined pixel it is possible that features assigned to all corner points of the bounding box are selected, these features are not all fed to the second trained machine learning model individually but are first combined by interpolation. This may result in determining interpolated features of a predetermined data type, such as integer instead of decimal, for example. This is particularly useful if the second trained machine learning model requires a specific data type and may result in reasonable preprocessing of the selected pixel features.

Another embodiment comprises that after determining the interpolated features a feature vector is determined that comprises the determined interpolated features. The second trained machine learning model is applied to the feature vector to determine the pixel information. In a preferred example, all interpolated features are combined to determine one feature vector. This means, that the interpolated features are not fed randomly to the second machine learning module, but they are first combined to form the one feature vector. The feature vector is a multi-resolution vector that comprises multiple interpolated features, in particular all determined interpolated features. The feature vector may be understood as a data structure that combines the interpolated features for the first image information but also for the at least one second image information so that the second trained machine learning model receives one specific input and may identify which interpolated features were determined for which image information. A position within the feature vector may depend on an origin of the interpolated features meaning on whether they were determined based on the first image information or the at least one second image information. This may speed up the calculations performed by the second trained machine learning model because it receives the interpolated features in a predefined and in particular optimized structure.

According to a preferred embodiment, the second trained machine learning model is a multi-layer perceptron. The multi-layer perceptron is a kind of feedforward neuronal network. The multi-layer perceptron is organized in layers and may distinguish data that is not linearly separable. A multi-layer perceptron is an easily trainable neural network to use on images so that the computer-implemented method benefits from advantages of deep learning techniques.

Another embodiment comprises that the pixel information is determined for a predetermined set of pixels of a region of interest in the at least one image of the first image information or for all pixels of the at least one image of the first image information. The predetermined pixel for which the computer-implemented method is performed may thus be a pixel out of the predetermined set of pixels or may be a pixel out of all pixels of the image. Preferably, it is determined before performing the computer-implemented method, for which pixels the pixel information is required. This may be determined based on a user input or may be determined at least partially automatically, for example, by applying a pixel selection algorithm that may determine the region of interest or a need for the pixel information for all pixels. The pixel selection algorithm may be a rule-based algorithm and/or may comprise at least one trained machine learning model. For at least a part of the pixels of the region of interest or of all pixels of the at least one image, in particular for all pixels of the region of interest or the at least one image, the computer-implemented method may be performed simultaneously. Alternatively, it may be performed consecutively for each pixel or for groups of pixels individually. By determining the pixel information only for the region of interest it may be possible to reduce computational time and/or to increase accuracy of the determined pixel information without changing the computational time and/or used computational resources compared to determining the pixel information for all pixels of the at least one image. However, if the pixel information is required or wanted for all pixels of the at least one image it is nonetheless possible to determine the pixel information for all pixels of the at least one image.

According to another embodiment, the first image information comprises an image pair. The image pair comprises a first image and a second image that differ from one another but describe at least partially an identical object. The first image and the second image may be of different image types, meaning that they may be received from different imaging devices that use different imaging techniques. For example, the first image may be a CT image and the second image may be a magnetic resonance (MR) image or vice versa. Other image types are possible. Furthermore, the computer-implemented method comprises that the at least one second image information comprises an image pair comprising a further first image describing the first image in the different resolution and a further second image describing the second image in the different resolution. This means that the at least one second image information also comprises an image pair that differs from the image pair of the first image information with regard to resolution.

The multiple features, the pixel features and the interpolated features are each determined for a respective image pair meaning for the image pair comprised by the first image information and for the image pair comprised by the at least one second image resolution. The predetermined pixel that is considered hereby is a predetermined pixel of the first image comprised by the first image information. The second trained machine learning model performs a displacement determination so that the determined pixel information describes a placement between the predetermined pixel of the first image and a corresponding pixel of the second image. This means that a movement of the predetermined pixel between the first image and the second image is determined. The corresponding pixel describes a s part of the object in the second image that is described by the predetermined pixel in the first image.

The displacement determination may be understood as an image registration to estimate a transformation between the first image and the second image. The first image and the second image may alternatively be referred to as a moving image and a fixed image. When the second trained machine learning model is applied it produces based on the moving image, meaning the first image, a registered result matching the fixed image, meaning the second image. In clinical settings, image registration has various levels of need for accuracy and speed to facilitate different intra-operative tasks while also fitting into on-site systems that often have limited computational resources. These disadvantages are overcome by the computer-implemented method because it may provide an instance-agnostic implicit neural representation (INR) framework that in a preferred example incorporates neural graphic primitives (NGP) via efficient multi-resolution hash encoding with inferred hash tables.

In an alternative embodiment, the second trained machine learning model performs segmentation so that the determined pixel information describes an object class. It is hereby not required to consider image pairs as described above for the displacement determination. However, the first image information may comprise multiple images in an example. The second trained machine learning model determines for the predetermined pixel of the at least one image comprised by the first image information to which object class out of a predetermined group of object classes the predetermined pixel belongs. The predetermined group may differentiate between specific organs or other body parts, tissue, background and so on. By performing segmentation the object described by the predetermined pixel is identified so that a useful feature for further processing of the first image information is determined and provided.

In this embodiment, the first trained machine learning model may be specific for segmentation as well, meaning it may be trained to determine multiple features that are relevant and/or useful for the segmentation task of the second trained machine learning model.

Alternatively or additionally to segmentation, the second trained machine learning model performs denoising so that the determined pixel information describes a further pixel that corresponds to the predetermined pixel but is less affected by image noise compared to the predetermined pixel. Denoising means noise reduction, meaning that unwanted or random variations in pixel values are at least reduced for the predetermined pixel. Image noise may degrade a quality and clarity of an image so that pixelwise denoising is particularly useful.

In this embodiment, the first trained machine learning model may be specific for desoising, meaning it may be trained to determine multiple features that are relevant and/or useful for the denoising or noise reduction task of the second trained machine learning model.

Alternatively or additionally to segmentation or denoising, the second trained machine learning model performs image inpainting so that the determined pixel information describes a further pixel that corresponds to a reconstruction of the predetermined pixel. Image inpainting means reconstructing missing regions in the image and/or reconstructing regions in which at least one object that may be removed from the image. Image inpainting may thus comprise image restoration, image manipulation, image re-targeting, image compositing, and/or image-based rendering. The reconstructing is performed pixelwise.

In this embodiment, the first trained machine learning model may be specific for image inpainting, meaning it may be trained to determine multiple features that are relevant and/or useful for the image inpainting task of the second trained machine learning model.

Alternatively or additionally to segmentation, denoising or image inpainting, the second trained machine learning model performs image enhancement so that the determined pixel information describes a further pixel that corresponds to the predetermined pixel but has at least one increased image quality parameter compared to the predetermined pixel. In other words, image enhancement filtering may be performed, in particular image super-resolution. Image super-resolution refers to the task of enhancing the resolution of an image from low-resolution to high resolution which is done here pixel by pixel. An image comprising multiple further pixels according to multiple determined pixel information may allow particularly precise detection of objects of interests, such as medical targets.

In this embodiment, the first trained machine learning model may be specific for image enhancement, meaning it may be trained to determine multiple features that are relevant and/or useful for the image enhancement task of the second trained machine learning model.

In another embodiment, the at least one image comprised by the first image information is of a first image type. In an example, it may be the CT image. The second trained machine learning model performs an image synthesis from the first image type to a different second image type so that the determined pixel information describes a further pixel in the second image type that corresponds to the predetermined pixel. The further pixel may be a pixel of a further image comprised by a further image information that is of the second image type, such as, for example, an MR image. This means that a pixel wise transform of the at least one image comprised by the first image information to the further image in the second image type is at least partially performed when applying the computer-implemented method. The image synthesis may at least perform a change in pixel intensity and/or in other pixel properties that depend on the first and second image type. By performing image synthesis, the image type may be changed fast and reliably if, for example, further processing and/or analysis of the first image information could benefit from the image type change.

In this embodiment, the first trained machine learning model may be specific for image synthesis, meaning it may be trained to determine features that are relevant and/or useful for the image synthesis task of the second trained machine learning model.

According to another embodiment, the second trained machine learning model performs the displacement determination and/or the segmentation and/or the image synthesis. Alternatively or additionally, the first trained machine learning model may be specific for the displacement determination and/or the segmentation and/or the image synthesis.

Segmentation, denoising, image inpainting, image enhancement and/or image synthesis may require at least one input image, meaning a first image information that comprises at least one image and may comprise multiple images. The determined pixel information may be a single value, in particular a real-valued scalar value. That scalar value may be mapped to a physical image intensity value, which may be in Hounsfield unit used in computer tomography, for example.

Another aspect of the invention relates to a method to determine at least one feature of a predetermined pixel of an image. The method comprises acquiring a first image information by a medical imaging device and performing the above-described computer-implemented method. Besides, the method comprises outputting the determined pixel information by an output device. The output device may comprise at least one screen. The medical imaging device may be a magnetic resonance imaging (MRI) system, computer tomography (CT) system, positron emission tomography (PET) system, ultrasound (US) imaging system and/or another medical imaging system or device.

In particular, the invention may relate to a method to determine a displacement between a first pixel of a first image and a corresponding second pixel of a second image that differs from the first image but describes at least partially an identical object. The method comprises: acquiring the first image by a first medical imaging device; acquiring the second image by the first medical imaging device at a different point in time or by a second medical imaging device that differs from the first medical imaging device; and performing the above-described computer-implemented method under consideration of a first image information that comprises the acquired first image and second image. Besides, the method comprises outputting the determined pixel information that describes the displacement between the first pixel and the second pixel by an output device.

Another aspect of the invention relates to a data processing system configured to perform a computer-implemented method as described above. The data processing system may be comprised by a medical imaging device.

Unless stated otherwise, all steps of the computer-implemented method may be performed by the data processing system, which comprises at least one data processing device. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to execute the computer-implemented method. The expressions "data processing system" and "at least one data processing device" may be used interchangeably, here and in the following. This holds also for respective expressions derived therefrom.

In case the at least one data processing device comprises two or more data processing devices, certain steps carried out by the at least one data processing device may also be understood such that different data processing devices carry out different steps or different parts of a step. In particular, it is not required that each data processing device carries out the steps completely. In other words, carrying out the steps may be distributed amongst the two or more data processing devices.

From each implementation of the computer-implemented method, a respective implementation of the method, which is not purely computer-implemented, is obtained by including respective steps of acquiring and/or reacquiring the first image information.

Another aspect of the invention relates to a medical imaging device that comprises a scanner and a data processing system. The medical imaging device is configured to perform the above-described method. The medical imaging device performs the above-described method.

According to a further aspect of the invention, a computer program comprising instructions is provided. When the instructions are executed by a data processing system, the instructions cause the data processing system to carry out a computer-implemented method according to the invention.

The instructions may be provided as program code, for example. The program code can for example be provided as binary code or assembler and/or as source code of a programming language, for example C, and/or as program script, for example Python.

According to a further aspect of the invention, a computer-readable storage medium, in particular a tangible and/or non-transient computer readable storage medium, storing a computer program according to the invention is provided.

The computer program and the computer-readable storage medium are respective computer program products comprising the instructions.

Receiving information within the meaning of the invention may, for example, involve receiving or obtaining the information, in particular by the data processing system from a transmitting entity, or reading the information from a data memory, or receiving an information stream containing the information, or extracting the information from the information stream. In particular, wired or wireless data transmission may be used for this purpose. In particular, the information transmission may take place between a hardware and/or software interface of the sending entity and a hardware and/or software interface of the data processing system. An information in the sense of the invention may be understood as or may comprise data or part of data.

In general terms, a trained machine learning model may mimic cognitive functions that humans associate with other human minds. In particular, by training based on training data the machine learning model may be able to adapt to new circumstances and to detect and extrapolate patterns. Another term for a trained machine learning model is "trained function".

In general, parameters of a machine learning model can be adapted or updated by means of training. In particular, supervised training, semi-supervised training, unsupervised training, reinforcement learning and/or active learning can be used. Furthermore, representation learning, also denoted as feature learning, can be used. In particular, the parameters of the machine learning models can be adapted iteratively by several steps of training. In particular, within the training a certain loss function, also denoted as cost function, can be minimized. In particular, within the training of an artificial neural network the backpropagation algorithm can be used. The artificial neural network is a neural network.

In particular, a trained machine learning model can comprise an artificial neural network, a support vector machine, a decision tree and/or a Bayesian network, and/or the trained machine learning model can be based on k-means clustering, Q-learning, genetic algorithms and/or association rules. In particular, a neural network can be or comprise a deep neural network, a convolutional neural network or a convolutional deep neural network. Furthermore, a neural network can be an adversarial network, a deep adversarial network and/or a generative adversarial network (GAN).

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

The figures show in:
- FIG 1: a schematic representation of a medical imaging system,
- FIG 2: a schematic representation of a computer-implemented method to determine at least one feature of a predetermined pixel,
- FIG 3: a schematic representation of steps to determine which predetermined pixel should be considered when applying the method according to FIG 2, and
- FIG 4: a schematic representation of a multilayer perceptron.

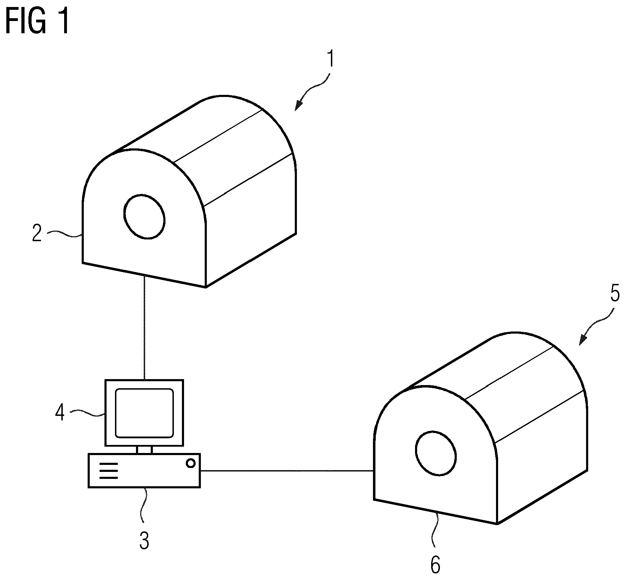

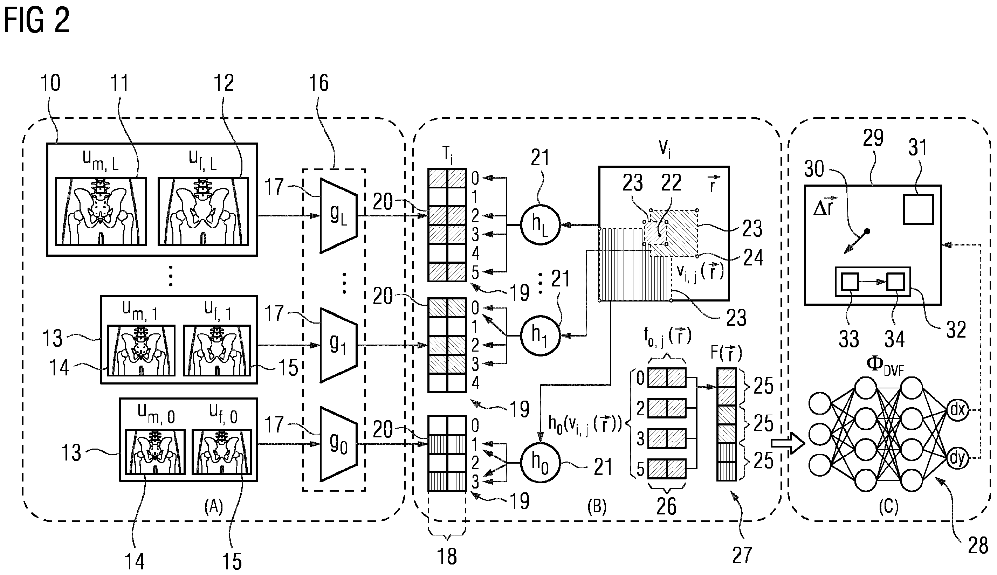

FIG 1 shows schematically an exemplary implementation of a medical imaging system that comprises a first medical imaging device 1, such as a magnetic resonance imaging (MRI) system. The first medical imaging device 1 comprises a medical imaging scanner 2. The medical imaging system, in particular the first medical imaging device 1, comprises a data processing system 3 for controlling the scanner 2. Furthermore, the medical imaging system may comprise an output device 4 coupled to the data processing system 3 and/or to the scanner 2. The medical imaging system may comprise a storage unit (not shown) storing a computer program according to the invention. The data processing system 3 may perform a computer-implemented method according to FIG 2.

In an example, the medical imaging system may comprise a second medical imaging device 5 that may comprise a scanner 6. The second medical imaging device 5 may use the data processing system 3 for controlling the scanner 6. The second medical imaging device 5 may be another MRI system or, for example, a computer tomography (CT) system. The MRI and CT system are only examples. Other kinds of medical imaging device 1, 5 are possible. However, the first medical imaging device 1 and the second medical imaging device 5 may be configured to acquire images of different image types or of the same image type.

FIG 2 shows a computer-implemented method to determine at least one feature of a predetermined pixel 22 of an image. The computer-implemented method may comprise receiving a first image information 10. The first image information 10 may comprise at least one image, such as the image with the predetermined pixel 22. In the sketched example, the first image information 10 comprises an image pair that comprises a first image 11 and a second image 12. The first image 11 and the second image 12 differ from one another but describe at least partially an identical object. The first image 11 and the second image 12 may have been acquired by the same medical imaging device 1, 5 but at different points in time or by different medical imaging devices 1, 5. Alternatively, the first image information 10 comprises one image or more than two images. In the following, it is assumed that the first image information 10 comprises the image pair.

The computer-implemented method comprises receiving at least one second image information 13 that corresponds to the first image information 10 but has a different resolution compared to the first image information 10. In the sketched example, the second image information 13 comprises an image pair that corresponds to the image pair comprised by the first image information 10 but has a different resolution than the image pair comprised by the first image information 10. Here, the resolution is reduced, meaning that the first image information 10 is down-sampled to determine the second image information 13. This means that the at least one second image information 13 comprises an image pair which comprises a further first image 14 that describes the first image 11 in the different resolution compared to the first image 11, and a further second image 15 that describes the second image 12 in the different resolution. All images comprised by the second image information 13 may have the same resolution or may differ in resolution. If the first image information 10 only comprises one image the at least one second image information 13 comprises only one image that has the different resolution compared to the image comprised by the first image information 10.

The computer-implemented method comprises the following three steps that are performed individually for the first image information 10 and the at least one second image information 13. A first step of the three steps may comprise determining multiple features 18 by applying a first trained machine learning model 16 to the respective image information 10, 13. In a preferred example, the first trained machine learning model 16 determines for the first image information 10 and the at least one second image information 13 individually as a hash table 19 that comprises the multiple features 18 assigned to the respective image information 10, 13. This may result in multiple hash table Tᵢ, with i being an integer number between 0 and L. The first trained machine learning model 16 may comprise multiple resolution specific encoder networks 17. Only the encoder network 17 that is specific for the resolution of the respective image information 10, 13, is applied to this image information 10, 13. The encoder networks 17 are here differentiated as g₀, g₁ and so on until g_{L} with L being a number of different second image information 13. Here L = 2 because two second image information 13 are determined and considered as an example. More or less second image information 13 may be determined and considered alternatively.

A second step of the three steps may comprise selecting pixel features 20 that are assigned to the predetermined pixel 22 of the respective image information 10, 13 by applying a pixel feature selection algorithm 21 to the multiple features 18 determined for the respective image information 10, 13. The pixel feature selection algorithm may be understood as a rule-based algorithm and/or as another trained machine learning model.

Applying the pixel feature selection algorithm 21 may comprise determining a bounding box 23 in which the predetermined pixel 22 is located in the respective image information 10, 13. The predetermined pixel 22 is here marked as *̅r̅*̅. Applying the pixel feature selection algorithm 21 may comprise selecting features 18 as the selected pixel features 20 that are assigned to at least one corner point 24 of the bounding box 23. Here, this is sketched schematically for the three considered image information 10, 13. The determined bounding box 23 may be resolution specific as it is sketched here. The pixel feature selection algorithm 21 may comprise individual sub-algorithms depending on the resolution of the image information 10, 13. The sub-algorithms are here sketched as h₀, h₁ and so on until h_{L}. They may be understood as hash functions.

A third step of the three steps may comprises determining interpolated features 25 for the respective image information 10, 13 by applying an interpolation algorithm 26 to the selected pixel features 20. The interpolation algorithm 26 may interpolate between the selected pixel features 20 that are assigned to the corner points 24 of the bounding box 23. After determining the interpolated features 25 the method may comprise determining a feature vector 27 that comprises all determined interpolated features 25. The feature vector 27 is sketched here as ***F***(*̅r̅*̅).

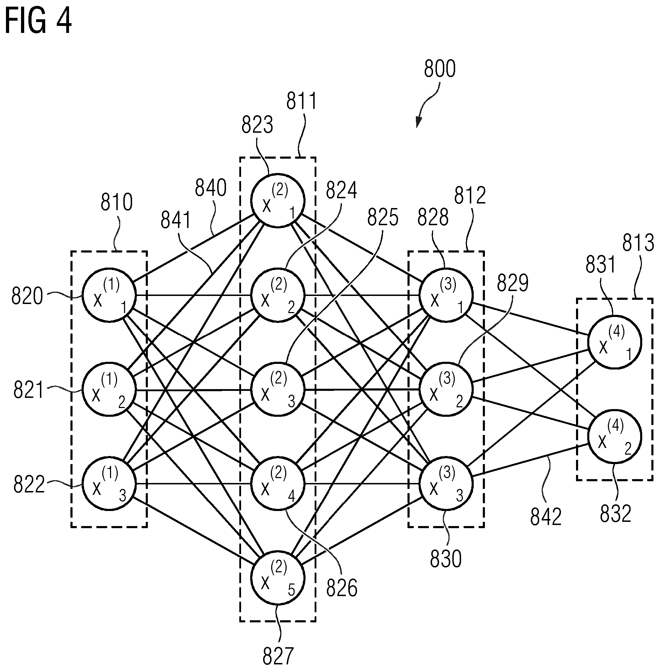

The method may comprise applying a second trained machine learning model 28 to the interpolated features 25, in particular to the feature vector 27. The second trained machine learning model 28 may be a multi-layer perceptron, which is here sketched as Φ*_{DVF}.* The multi-layer perception is described in more detail in FIG 4.

The second trained machine learning model 28 may determine a pixel information 29 that describes the at least one feature of the predetermined pixel 22. In the example sketched here, the pixel information 29 describes a displacement 30 between the predetermined pixel 22 of the first image 11 and a corresponding pixel of the second image 12. The displacement 30 is here sketched as Δ*r̅.* Alternatively or additionally, the second trained machine learning model 28 may perform segmentation so that the determined pixel information 29 describes an object class 31 of the predetermined pixel 22. Alternatively or additionally, the second trained machine learning model 28 may perform image synthesis 32 so that the determined pixel information 29 describes a further pixel that corresponds to the predetermined pixel 22, however the further pixel is of a second image type 34, whereas the predetermined pixel 22 is of a first image type 33. The first image type 33 and the second image type 34 differ from one another. In an example, the first image type 33 may be MRI data and the second image type 34 may be CT data. Other image types 33, 34 are possible.

Alternatively or additionally, the second trained machine learning model 28 may perform denoising so that the determined pixel information 29 describes a further pixel that corresponds to the predetermined pixel 22 but is less affected by image noise compared to the predetermined pixel 22. Alternatively or additionally, the second trained machine learning model 28 may perform image inpainting so that the determined pixel information 29 describes a further pixel that corresponds to a reconstruction of the predetermined pixel 22. Alternatively or additionally, the second trained machine learning model 28 may perform image enhancement so that the determined pixel information 29 describes a further pixel that corresponds to the predetermined pixel 22 but has at least one increased image quality parameter compared to the predetermined pixel 22.

The computer-implemented method may be understood as a method that comprises three consecutive stages or blocks A, B, C. These blocks are marked here as well.

In other words, the computer-implemented method comprises the following. The first stage A of the computer-implemented method comprises receiving as input paired images (first image information 10) with their respective down-sampled images (second image information 13) at configurable *L* levels of resolution (*uₘ* = {*u_{m,0}, u_{m,1},* ... ,*u_{m,L}*} and *u_{f} = {u_{f,0}, u_{f,1},* ... , *u_{f,L}*} for moving and fixed images respectively). A set of trainable encoding networks (here the encoder networks 17), *g* = {*g*₀, *g*₁, ... , *g*_{L}) with corresponding trainable parameters *θ_{g}* = {*θ*_{*g*₀}*, θ*_{*g*₁}*,* ... , *θ_{gL}*}, encodes uₘ and u_{f} into a set of multi-resolution hash tables 19, meaning {*T₀, T₁, ...,T_{L}*} *= g*(*uₘ,u_{f}; θ_{g}*). The hash table *Tᵢ* at resolution level *i* has a configurable size of *Nᵢ* × *Cᵢ*, storing *Nᵢ* feature vectors *fᵢ* each with dimension of *Cᵢ.*

The second stage B performs positional encoding of a query coordinate *̅r̅*̅ in *u_{m,L}* via multi-resolution hash grids with hash tables {*T₀, T₁, ..., T_{L}*} provided by stage A and hash functions {*h₀, h₁, ..., h_{L}*} (meaning the pixel feature selection algorithm 21) that can be predefined or trainable with parameters {*θ*_{*h*₀}*, θ*_{*h*₁}*,* ... , *θ_{hL}*}*.* Let {*V*₀, *V₁, ...,V_{L}*} be a set of multi-resolution hash grids, predefined by configurable resolutions that are coarser than *uₘ*. In each *Vᵢ*, *2^{d}* corners (corner points 24) surrounding *̅r̅*̅ will be identified as *v_{i,j}*(*̅r̅*̅), where *d* is the dimension of input images (2 for two-dimensional image and 3 for three-dimensional image), and *j* = 0,1, ..., 2*^{d}* - 1. *v_{i,j}*(*̅r̅*̅) are then hashed by *hᵢ* into index of *Tᵢ* to extract stored feature vectors, *f_{i,j}*(*r̅),* shown in equation (1) below. Note that hash collisions, in case that *Nᵢ* is smaller than a total number of corners in *Vᵢ,* will be handled implicitly by gradient updates of trainable parameters. *f_{i,j}*(*̅r̅*̅) are subsequently used in linear interpolation (denoted 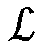 ) to compute feature vector at *̅r̅*̅ at resolution level *i.* Results from each level are concatenated (denoted ⊕), yielding ***F***(*̅r̅*̅), the multi-resolution latent feature vector at *̅r̅*̅, as shown in equation (2): ${f}_{i , j} \left(\vec{r}\right) = {h}_{i} \left({v}_{i , j}\left(\vec{r}\right)\right)$ (1) $F \left(\vec{r}\right) = {⊕}_{i} {L}_{j} \left({f}_{i , j}\left(\vec{r}\right)\right)$ (2)

The last stage C consists of the multi-layer perceptron, *Φ_{DVF},* with trainable parameters *θ_{DVF},* as an implicit neural representation of estimated displacement vector fields (DVF), which decodes ***F***(*̅r̅*̅) into displacement vector at *̅r̅*̅, i.e. Δ*r̅ =* Φ*_{DVF}*(***F***(*̅r̅*̅); *θ_{DVF}*).

In an example, the training of the proposed framework, meaning at least of the first trained machine learning model 16 and the second trained machine learning model 28, may be in supervised, unsupervised, weakly-supervised, or adversarial fashion with large-scale data that may be real, simulated, single-modality, multi-modality, inter- and/or intra-patient. However, the respective model needs to have a sufficient number of parameters to allow to the model to learn the space of possible deformations if train in an instance-agnostic manner on a large training dataset. The models, meaning *gₕ* and *Φ_{DVF}* (and {*h₀, h₁, ... , h_{L}*} if trainable) may be jointly trained in an end-to-end fashion. The loss function is computed with respect to, for example, output displacement vectors and the gradients are propagated to both {θ_{*g*₀}*, θ*_{*g*₁}*,* ... , *θ_{gL}*} and *θ_{DVF}* (and {*θ*_{*h*₀}*, θ*_{*h*₁}*,* ... , *θ_{hL}*} if present). Advanced training strategies may be used alternatively or additionally by utilizing that fact that implicit neural representation is a continuous function and therefore, the dimension of Δ*̅r̅*̅ is are solely determined by queried registration coordinate *̅r̅*̅ that can be sampled arbitrarily. This means that during training, both the inference of Δ*̅r̅*̅ and computation of loss can be at different resolution than input images, localized, and strategically sampled, providing options for super-resolution, region-targeted, and multi-resolution pyramid training.

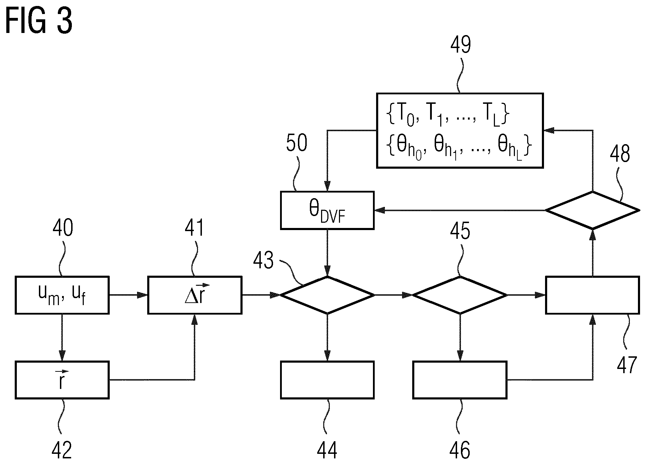

FIG 3 shows a flow chart that illustrates how to determine for which predetermined pixels 22 the pixel information 29 may be determined. For example, the pixel information 29 may be determined for each pixel out of a predetermined set of pixels of a region of interest or for all pixels of the first image information 10.

Once fully trained, the computer-implemented method may be used. Starting in step 40 with a given pair of input images, *uₘ* and *u_{f},* a set of coordinates *̅r̅*̅ where registration is to be performed are extracted for the given pair in step 42. *̅r̅*̅ may cover the entire moving image (first image information 10) or only the region of interest, sampled at any desired resolution. With *uₘ*, *u_{f},* and *̅r̅*̅, in step 41 corresponding displacement vectors Δ*̅r̅*̅ are estimated to produce one-shot registration results. These results are determined by performing stages B and C as described above.

Based on such results, a decision may be made in step 43 regarding if it's worth to spend more time for potential improvement in accuracy. This may be decided by the user and/or with the aid of other registration evaluation algorithms such as the one described in the publication "A neural network approach for fast, automated quantification of DIR performance" by Neylon, J. et al. (2017, Medical Physics, Volume 44). If the initial results are deemed desirable, then the one-shot registration will be used in step 44. Otherwise, a follow-up instance optimization stage may be reached in step 45, where the end user has the additional option to further decide if the improvement is to be made in specific regions, which can speed up the optimization. If no specific region is given in step 47 it may be chosen between more accuracy or more speed in step 48. It is assumed that during instance optimization, *θ_{DVF}* are the primary parameters that receive gradient updates in step 50, while {*T₀, T₁, ...,T_{L}*} and {θ_{*h*₀}*, θ*_{*h*₁}*,* ... , *θ_{hL}*} can optionally be optimized in steps 48 for better accuracy or frozen to reduce computational cost. Thus to improve speed step 49 is not performed but one goes directly from step 48 to step 50. In step *50 θ_{DVF}* is updated.

The instance optimization in step 47 may be done following existing approaches of using implicit neural representation in deformable registration, such as the publication "Implicit Neural Representations for Deformable Image Registration" by Wolterink, J.M. et al. (2022, Proceedings of Machine Learning Research, Volume 172). In tis publication loss function (such as similarities and dice) and regularization terms (such as Jacobian norm and inverse consistency) are computed with respect to Φ *_{DVF}*(***F***(*̅r̅*̅); *θ_{DVF}*), and gradients are propagated to *θ_{DVF}* (optionally {*T₀, T₁, ..., T_{L}*} and {*θ*_{*h*₀}*, θ*_{*h*₁}*,* ... , *θ_{hL}*}) and updated by an optimizer such as Adam and stochastic gradient descent (SGD).

Additionally or alternatively, the computer-implemented method may be applied to image segmentation and synthesis tasks by simply modifying the input channel number of encoding network and then changing the output of the second trained machine learning model 28 from displacement vectors to segmentation labels and pixel intensities respectively. The training loss and instance optimization loss are also to be adjusted according to tasks.

FIG 4 displays an embodiment of a neural network 800, which is for example designed as an multi-layer perceptron. The neural network 800 may thus be an example for the second trained machine learning model 28. The neural network 800 comprises nodes 820, ..., 832 and edges 840, ..., 842, wherein each edge 840, ..., 842 is a directed connection from a first node 820, ..., 832 to a second node 820, ..., 832. In general, the first node 820, ..., 832 and the second node 820, ..., 832 are different nodes 820, ..., 832. It is, however, also possible that the first node 820, ..., 832 and the second node 820, ..., 832 are identical. For example, in FIG 4, the edge 840 is a directed connection from the node 820 to the node 823, and the edge 842 is a directed connection from the node 830 to the node 832. An edge 840, ..., 842 from a first node 820, ..., 832 to a second node 820, ..., 832 is also denoted as ingoing edge for the second node 820, ... , 832 and as outgoing edge for the first node 820, ..., 832.

In this example, the nodes 820, ..., 832 of the artificial neural network 800 can be arranged in layers 810, ..., 813, wherein the layers can comprise an intrinsic order introduced by the edges 840, ..., 842 between the nodes 820, ..., 832. In particular, edges 840, ..., 842 can exist only between neighboring layers of nodes. In the displayed example, there is an input layer 810 comprising only nodes 820, ..., 822 without an incoming edge, an output layer 813 comprising only nodes 831, 832 without outgoing edges, and hidden layers 811, 812 in-between the input layer 810 and the output layer 813. In general, the number of hidden layers 811, 812 can be chosen arbitrarily. In an MLP, this number is at least one. The number of nodes 820, ..., 822 within the input layer 810 usually relates to the number of input values of the artificial neural network 800, and the number of nodes 831, 832 within the output layer 813 usually relates to the number of output values of the artificial neural network 800.

In particular, a real number can be assigned as a value to every node 820, ..., 832 of the artificial neural network 800. Here, x⁽ⁿ⁾ᵢ denotes the value of the i-th node 820, ..., 832 of the n-th layer 810, ..., 813. The values of the nodes 820, ..., 822 of the input layer 810 are equivalent to the input values of the artificial neural network 800. The values of the nodes 831, 832 of the output layer 813 are equivalent to the output value of the artificial neural network 800. Furthermore, each edge 840, ..., 842 can comprise a weight being a real number. In particular, the weight is a real number within the interval [-1, 1] or within the interval [0, 1]. Here, w^{(m,n)}_{i,j} denotes the weight of the edge between the i-th node 820, ..., 832 of the m-th layer 810, ..., 813 and the j-th node 820, ..., 832 of the n-th layer 810, ..., 813. Furthermore, the abbreviation w⁽ⁿ⁾_{i,j} is defined for the weight w^{(n,n+1)}_{i,j}. In particular, to calculate the output values of the neural network 800, the input values are propagated through the neural network 800. In particular, the values of the nodes 820, ..., 832 of the (n+1)-th layer 810, ..., 813 can be calculated based on the values of the nodes 820, ..., 832 of the n-th layer 810, ..., 813 by ${x}_{j}^{\left(n+1\right)} = f \left({\sum }_{i} {x}_{i}^{\left(n\right)} {w}_{i , j}^{\left(n\right)}\right) .$

**Herein, the** function f is denoted as transfer function or activation function. Known transfer functions are step functions, the sigmoid functions, for example the logistic function, the generalized logistic function, the hyperbolic tangent, the arctangent function, the error function, the smoothstep function, or rectifier functions. The transfer function is for example used for normalization purposes. In particular, the values are propagated layer-wise through the neural network 800, wherein values of the input layer 810 are given by the input of the neural network 800, wherein values of the first hidden layer 811 can be calculated based on the values of the input layer 810 of the neural network 800, wherein values of the second hidden layer 812 can be calculated based on the values of the first hidden layer 811, and so forth.

In order to set the values w^{(m,n)}_{i,j} for the edges, the neural network 800 has to be trained using training data. In particular, training data comprises training input data and training output data (denoted as tᵢ). For a training step, the neural network 800 is applied to the training input data to generate calculated output data. In particular, the training data and the calculated output data comprise a number of values, said number being equal with the number of nodes of the output layer. In particular, a comparison between the calculated output data and the training data is used to recursively adapt the weights within the neural network 800 (backpropagation algorithm). In particular, the weights are changed according to ${w}_{i , j}^{′ \left(n\right)} = {w}_{i , j}^{\left(n\right)} - γ {δ}_{j}^{\left(n\right)} {x}_{i}^{\left(n\right)} ,$ wherein γ is a predefined learning rate, and the numbers δ⁽ⁿ⁾ⱼ can be recursively calculated as ${δ}_{j}^{\left(n\right)} = \left({\sum }_{k} {δ}_{k}^{\left(n+1\right)} {w}_{j , k}^{\left(n+1\right)}\right) f ′ \left({x}_{i}^{\left(n\right)}{w}_{i , j}^{\left(n\right)}\right)$ based on δ⁽ⁿ⁺¹⁾ⱼ, if the (n+1)-th layer is not the output layer 813, and ${δ}_{j}^{\left(n\right)} = \left({x}_{j}^{\left(n+1\right)}-{t}_{j}^{\left(n+1\right)}\right) f ′ \left({x}_{i}^{\left(n\right)}{w}_{i , j}^{\left(n\right)}\right) ,$ **if the (n+1)-th** layer is the output layer 813, wherein f' is the first derivative of the activation function, and t⁽ⁿ⁺¹⁾ⱼ is the comparison training value for the j-th node of the output layer 813.

In summary, the computer-implemented method relates to an algorithm that may be referred to as HEMI-INR, which is a framework for deformable image registration using instance-agnostic implicit neural representation (INR) via hash ecoding with multi-resolution inference (HEMI).

HEMI-INR has at least the following advantages:
1.) Improved encoding of image features, especially high-spatial frequency structures compared to existing agnostic-INR approach. This is possible because HEMI-INR:
   - Uses multi-resolution encoding approaches, achieved by multiple encoding networks operate on image at multiple levels of resolution. In existing instance-agnostic approach, such as NePhi (described in the publication "NePhi: Neural Deformation Fields for Approximately Diffeomorphic Medical Image Registration" by Tian, L. et al. in 2023), the low-resolution registration is performed via a separate framework and acts as prior to the high-resolution INR, and no additional latent features were extracted from low-resolution images.
   - Encodes features via hash tables 19, which has superior performance in representing high-frequency contents compared to dense latent space feature grid as proposed in existing instance-agnostic INR.
2.) Reduced memory footprint (log-linear to resolution) and computation time via the use of multi-resolution hash girds that:
   - Avoid voxel-wise convolutional decoding that consumes a large amount of memory due to intermediate outputs and gradients.
   - Significantly reduce the number of floating-point operations and memory access.
   - Permit the use of smaller multi-layer perceptrons to decode features, which is faster and consumes less memory.
3.) Efficient and flexible training options by utilizing the continuous property of INR, which has not been taken full advantages of in previous instance-agnostic INR approach. By strategically sampling registration query coordinates r , we can achieve the following:
   - Super-resolution training by sampling r at resolution higher than input images. This enables the network to infer high-frequency features from low-resolution images, saving memory in encoding network.
   - Region-targeted training by sampling r more frequently from organs that are typically of interests in registration tasks. This will efficiently train the network to focus on anatomically significant features.
   - Multi-resolution pyramid training by sampling r sparsely at the beginning of training and gradually increase its density to be effective in capture features from all frequencies.
4.) Deep customization of balance between performance and computational cost, allowing HEMI-INR to be used without re-design and re-training on difference clinical applications that have different focus on speed and accuracy, and different clinical systems with different amount of available computational resources. While such aspect was not addressed in previously proposed INR-based approaches, the approach according to FIG 3 allows detailed control of accuracy-speed balance via the following:
   - Strategic extraction of registration coordinates. Depending on clinical tasks, not all voxels in moving image will require the same registration accuracy, e.g. air and patient bed compared to prostate and bladder. The option to flexibly select registration coordinates gives the option to trade accuracy in task-irrelevant regions for faster inference and less memory consumption, while still achieving desired results in regions of interests.
   - Flexibility in instance optimization targets. Not all regions after one-shot registration will require the same degree of additional improvement from instance optimization. By excluding registered regions that are good enough and/or less important to the given clinical task, our proposed approach can achieve faster instance optimization in other regions that truly need improvement.
   - Flexibility in instance optimization parameters. While instance optimization of all parameters in HEMI-INR offers the capacity for most accurate results, such option may have diminishing returns or be limited by available computation resources. The option provided by our framework to select parameters that receive gradient updates during instance optimization allows the end user to purposefully control the balance between accuracy and speed to fit clinical tasks and available clinical systems.

## Claims

1. Computer-implemented method to determine at least one feature of a predetermined pixel (22) of an image, wherein the computer-implemented method comprises:
- receiving a first image information (10) comprising at least one image that comprises the predetermined pixel (22);
- receiving at least one second image information (13) that corresponds to the first image information (10) but has a different resolution than the first image information (10);
- for the first image information (10) and the at least one second image information (13) individually:
- determining multiple features (18) by applying a first trained machine learning model (16) to the respective image information (10, 13);
- selecting pixel features (20) that are assigned to the predetermined pixel (22) by applying a pixel feature selection algorithm (21) to the multiple features (18) determined for the respective image information (10, 13);
- determining interpolated features (25) for the respective image information (10, 13) by applying an interpolation algorithm (26) to the selected pixel features (20);
- determining a pixel information (29) describing the at least one feature of the predetermined pixel (22) by applying a second trained machine learning model (28) to the determined interpolated features (25).

2. Computer-implemented method according to claim 1, wherein applying the first trained machine learning model (16) results in determining for the first image information (10) and the at least one second image information (13) individually a hash table (19) that comprises the multiple features (18) assigned to the respective image information (10, 13).

3. Computer-implemented method according to any one of the preceding claims, wherein the first trained machine learning model (16) comprises multiple resolution specific encoder networks (17), wherein only the encoder network (17) that is specific for the resolution of the respective image information (10, 13) is applied to this image information (10, 13).

4. Computer-implemented method according to any one of the preceding claims, wherein applying the pixel feature selection algorithm (21) comprises determining a bounding box (23) in which the predetermined pixel (22) is located in the at least one image of the respective image information (10, 13) and selecting features as the selected pixel features (20) that are assigned to at least one corner point (24) of the bounding box (23).

5. Computer-implemented method according to claim 4, wherein the determined bounding box (23) is resolution specific.

6. Computer-implemented method according to claim 4 or 5, wherein the interpolation algorithm (26) interpolates between the selected pixel features (20) that are assigned to the at least one corner point (24) of the bounding box (23).

7. Computer-implemented method according to any one of the preceding claims, wherein after determining the interpolated features (25) a feature vector (27) is determined that comprises the determined interpolated features (25) and the second trained machine learning model (28) is applied to the feature vector (27) to determine the pixel information (29).

8. Computer-implemented method according to any one of the preceding claims, wherein the second trained machine learning model (28) is a multi-layer perceptron.

9. Computer-implemented method according to any one of the preceding claims, wherein the pixel information (29) is determined for a predetermined set of pixels of a region of interest in or for all pixels of the at least one image of the first image information (10).

10. Computer-implemented method according to any one of the preceding claims, wherein:
- the first image information (10) comprises an image pair comprising a first image (11) and a second image (12) that differ from one another but describe at least partially an identical object;
- the at least one second image information (13) comprises an image pair comprising a further first image (14) describing the first image (11) in the different resolution and a further second image (15) describing the second image (12) in the different resolution;
- the multiple features (18), the selected pixel features (20) and the interpolated features (25) are determined for the respective image pair, wherein the predetermined pixel (22) is a predetermined pixel (22) of the first image (11); and
- the second trained machine learning model (28) performs a displacement determination so that the determined pixel information (29) describes a displacement (30) between the predetermined pixel (22) of the first image (11) and a corresponding pixel of the second image (12).

11. Computer-implemented method according to any one of the preceding claims, wherein the second trained machine learning model (28) performs:
- segmentation so that the determined pixel information (29) describes an object class (31) for the predetermined pixel (22); and/or
- denoising so that the determined pixel information (29) describes a further pixel that corresponds to the predetermined pixel (22) but is less affected by image noise compared to the predetermined pixel (22); and/or
- image inpainting so that the determined pixel information (29) describes a further pixel that corresponds to a reconstruction of the predetermined pixel (22); and/or
- image enhancement so that the determined pixel information (29) describes a further pixel that corresponds to the predetermined pixel (22) but has at least one increased image quality parameter compared to the predetermined pixel (22).

12. Computer-implemented method according to any one of the preceding claims, wherein
- the at least one image comprised by the first image information (10) is of a first image type (33); and
- the second trained machine learning model (28) performs an image synthesis (32) from the first image type (33) to a different second image type (34) so that the determined pixel information (29) describes a further pixel that corresponds to the predetermined pixel (22) in the second image type (34).

13. Method to determine at least one feature of a predetermined pixel (22) of an image, wherein the method comprises:
- acquiring a first image information (10) by a medical imaging device (1, 5);
- performing a computer-implemented method according to any one of the preceding claims;
- outputting the determined pixel information (29) by an output device (4).

14. Data processing system (3), configured to carry out a computer-implemented method according to any one of claims 1 to 12.

15. Computer program product comprising instructions, which, when executed by a data processing system (3), cause the data processing system (3) to carry out a computer-implemented method according to any one of claims 1 to 12.
